# EUROPÄISCHE PATENTANMELDUNG

(11) **EP 3 900 807 A1**
(43) Veröffentlichungstag der Anmeldung: **27.10.2021**
(21) Anmeldenummer: 21165155.9
(22) Anmeldetag: 26.03.2021
(51) Int. Cl.: B01D 46/00, B01D 46/24, B01D 46/52

(54) **HALTEVORRICHTUNG FÜR FILTERPATRONEN IN LUFTFILTERVORRICHTUNGEN SOWIE VERFAHREN ZUM EINSETZEN EINER FILTERPATRONE IN EINE LUFTFILTERVORRICHTUNG**

(30) Priorität: 24.04.2020 DE 102020111194; 24.04.2020 DE 202020102284 U
(71) Anmelder: Olofsson, Lars, 48734 Reken (DE)
(72) Erfinder: Olofsson, Lars, 48734 Reken (DE)
(74) Vertreter: Seyer, Roman

(57) **Zusammenfassung**

Haltevorrichtung für Filterpatronen in Luftfiltervorrichtungen, wobei die Haltevorrichtung eine Adaptervorrichtung zum Anbringen an der Luftfiltervorrichtung und eine Fixiervorrichtung, die ausgebildet ist, an der Adaptervorrichtung und an einer Filterpatrone festgelegt zu werden, umfasst.

## Beschreibung

Die vorliegende Erfindung betrifft eine Haltevorrichtung für Filterpatronen in Luftfiltervorrichtungen sowie ein Verfahren zum Einsetzen einer Filterpatrone in eine Luftfi ltervorrichtung.

Filterpatronen, insbesondere Einweg-Filterpatronen, werden in Luftfiltervorrichtungen, insbesondere in Industrie-Filteranlagen wie Absauganlagen, für die Rauch- und Staubabsaugung sowie in Raumlüftungssystemen verwendet. In vielen Industrieprozessen entsteht gesundheitsschädigender Rauch, Staub oder Luft, die störende Partikel oder Gase enthält, sodass diese Kontaminationen entweder direkt am Entstehungsort über Absaugarme oder mittels einer im Raum stationär angeordneten Luftfiltervorrichtung abgesaugt und aus der Luft gefiltert werden. Die Kontaminationen sammeln sich in der Filterpatrone an, die nach einer gewissen Zeit auszutauschen ist.

In der Regel werden Filterpatronen verwendet, die eine kreiszylindrische Grundform aufweisen, wobei der Mantel der zylindrischen Grundform aus dem Filtermaterial gebildet wird. Das Filtermaterial liegt in der Regel in der Form eines Faltenfilters vor. Eine solche Filterpatrone weist üblicherweise einen Flansch auf, der mit einem Flansch der Luftfiltervorrichtung verbunden wird. Die Rotationsachse des Filterpatronen-Zylinders, d.h. die Längsachse, befindet sich im Luftleitungskanal der Filterpatrone, durch den die gefilterte Luft strömt. Die zu reinigende Luft strömt die Filterpatrone von außen an und gelangt durch das Filtermaterial in den innen liegenden Luftleitungskanal, während die aus der Luft abzutrennenden Partikel in dem Filter verbleiben. Sobald die Schmutzpartikel das Filtermaterial zu einem bestimmten Anteil zugesetzt haben und eine Abreinigung per Druckluft-Rückstoß nicht mehr ausreicht, ist die Filterpatrone durch eine neue Filterpatrone zu tauschen.

Der Austausch der Filterpatrone erfolgt üblicherweise, indem die Befestigung der Filterpatrone, mit der diese in der Luftfiltervorrichtung in der Gebrauchsposition gehalten wird, gelöst und die verschmutzte Filterpatrone durch die meist kleine Filterwechselklappe entnommen wird. Anschließend kann die neue Filterpatrone eingesetzt werden und mit der Luftfiltervorrichtung verbunden werden.

In der Regel sind Filterpatronen so in der Luftfiltervorrichtung verbaut, dass die Längsachse vertikal verläuft. Die Filterpatrone ist somit gewöhnlich mit ihrem oberen Ende mit der Luftfiltervorrichtung verbunden.

Nachteilig bei den bekannten Luftfiltervorrichtungen ist, dass das Lösen einer eingesetzten Filterpatrone sowie das Einsetzen einer neuen Filterpatrone aufwendig sind. Dies ist insbesondere durch die kleine Filterwechselklappe und die beengten Raumverhältnisse in der Luftfiltervorrichtung bedingt, die zu schlechten Sichtbedingungen sowie einem eingeengten Arbeitsraum führen. Zudem sind diverse Werkzeuge wie beispielsweise Schraubenschlüssel für den Austausch notwendig, deren Einsatz durch die schlechten Sicht- und beengten Raumverhältnisse erschwert wird. Des Weiteren sind üblicherweise mehrere Verbindungen zu lösen bzw. zu verbinden bevor eine Filterpatrone aus der Filtervorrichtung entnommen werden kann bzw. mit der Filtervorrichtung verbunden ist. Üblicherweise ist die Filterpatrone an ihren beiden Enden mit der Filtervorrichtung verbunden, wobei insbesondere die Enden der Filterpatrone in der Luftfiltervorrichtung nur schwer zugänglich sind. Zudem ist zu bedenken, dass die Luftfiltervorrichtungen stark verschmutzt sind, wobei der Schmutz meist gesundheitsgefährdend ist, sodass lange Arbeitsvorgänge in der Luftfiltervorrichtung nicht nur unangenehm sondern auch schädlich für die den Filterwechsel durchführende Person ist.

Des Weiteren ist es schwierig, die neu einzusetzende Luftfilterpatrone derart zu zentrieren, dass diese vertikal in der Luftfiltervorrichtung angeordnet ist und/oder die Anschlussvorrichtung, insbesondere der Flansch, der Luftfilterpatrone passgenau zu der Anschlussvorrichtung, insbesondere dem Flansch, der Luftfiltervorrichtung angeordnet ist.

Ferner unterscheiden sich die verschiedenen Luftfiltervorrichtungen, insbesondere die Luftfiltervorrichtungen verschiedener Hersteller, voneinander. Insbesondere unterscheiden sich die Anschlussvorrichtungen der Luftfiltervorrichtungen, die vorgesehen sind, um mit den Anschlussvorrichtungen der Filterpatrone verbunden zu werden, sodass für viele Luftfiltervorrichtungen spezielle Filterpatronen mit einer speziell auf die Luftfiltervorrichtung abgestimmten Anschlussvorrichtung notwendig sind.

Die Aufgabe der Erfindung ist, eine Haltevorrichtung für Filterpatronen bereitzustellen, die die aus dem Stand der Technik bekannten Nachteile überwindet. Die Aufgabe der Erfindung ist somit, eine Haltevorrichtung für Filterpatronen bereitzustellen, die es ermöglicht, zügig und werkzeuglos eine in einer Luftfiltervorrichtung durch eine solche Haltevorrichtung gehaltene Filterpatrone zu wechseln. Als Aufgabe der Erfindung kann des Weiteren gesehen werden, die Verwendung einer Standard-Filterpatrone, d. h. einer Filterpatrone mit einer einheitlichen Standard-Anschlussvorrichtung, in jeder Luftfiltervorrichtung zu ermöglichen, unabhängig davon, wie die Anschlussvorrichtungen der Luftfiltervorrichtung ausgestaltet ist.

Zur Lösung der Aufgabe ist eine Haltevorrichtung für Filterpatronen in Luftfiltervorrichtungen vorgesehen, wobei die Haltevorrichtung eine Adaptervorrichtung zum Anbringen an der Luftfiltervorrichtung und eine Fixiervorrichtung, die ausgebildet ist, an der Adaptervorrichtung und an einer Filterpatrone festgelegt zu werden, umfasst.

Die erfindungsgemäße Haltevorrichtung umfasst somit eine Adaptervorrichtung sowie eine Fixiervorrichtung.

Die Adaptervorrichtung ist ausgebildet, an der Luftfiltervorrichtung festgelegt, d. h. befestigt, zu werden. Die Fixiervorrichtung ist ausgebildet, an einer Filterpatrone festgelegt zu werden. Zudem können die Adaptervorrichtung und die Fixiervorrichtung aneinander befestigt werden.

Bei einer Erstinbetriebnahme der erfindungsgemäßen Haltevorrichtung kann zunächst die Adaptervorrichtung mit der Luftfiltervorrichtung verbunden werden. Die Fixiervorrichtung kann zunächst außerhalb der Luftfiltervorrichtung mit der Filterpatrone verbunden werden und anschließend in die Luftfiltervorrichtung eingesetzt und dort mit der Adaptervorrichtung verbunden werden.

Bei einem Wechsel der Filterpatrone wird die Fixiervorrichtung von der Adaptervorrichtung gelöst und einschließlich der Filterpatrone aus der Filtervorrichtung entnommen. Die Adaptervorrichtung muss jedoch nicht von der Luftfiltervorrichtung gelöst werden und kann in der Luftfiltervorrichtung verbleiben. Anschließend wird die Fixiervorrichtung von der auszutauschenden Filterpatrone gelöst, an einer neu einzusetzenden Filterpatrone festgelegt und schließlich mit der in der Luftfiltervorrichtung verbliebenen Adaptervorrichtung verbunden.

Die erfindungsgemäße Vorrichtung ermöglicht somit das Einsetzen bzw. Entnehmen einer Filterpatrone in bzw. aus einer Luftfiltervorrichtung durch Verbinden bzw. Lösen einer einzigen Verbindung, nämlich der Verbindung zwischen der Adaptervorrichtung und der Fixiervorrichtung.

Vorzugsweise sind die Adaptervorrichtung und die Fixiervorrichtung so ausgebildet, dass sie werkzeuglos miteinander verbunden und voneinander gelöst werden können, sodass hierdurch ein noch einfacherer Filterpatronenwechsel vorgenommen werden kann.

Die erfindungsgemäße Haltevorrichtung ermöglicht es, einem Betreiber unterschiedlicher Luftfiltervorrichtungen verschiedenster Hersteller, Standard-Filterpatronen für alle Luftfiltervorrichtung vorzuhalten, statt für alle Typen von Filtervorrichtung mehrere passende Filterpatronen vorhalten zu müssen. Dies wird dadurch ermöglicht, dass der Betreiber einmalig jede Luftfiltervorrichtung mit einer für die jeweilige Filtervorrichtung passenden Adaptervorrichtung ausrüsten kann und anschließend Standard-Filterpatronen mittels der Fixiervorrichtung in der Filtervorrichtung verwenden kann.

Gemäß dem Stand der Technik, d. h. ohne Verwendung der erfindungsgemäßen Haltevorrichtung, wird ein Ende einer Filterpatrone unmittelbar derart mit der Filtervorrichtung verbunden, dass der in der Filterpatrone angeordnete Luftleitungskanal in den Luftleitungskanal der Filtervorrichtung für gefilterte Luft übergeht. Hierzu weist die Filterpatrone üblicherweise eine Anschlussvorrichtung, beispielsweise einen Flansch, auf, die passend zu der Anschlussvorrichtungen der Luftfiltervorrichtung ausgebildet ist.

Bei Verwendung der erfindungsgemäßen Haltevorrichtung, wird zunächst die Adaptervorrichtung mit der Luftfiltervorrichtung verbunden, wobei sich je nach Ausgestaltung der Luftfiltervorrichtung die Art der Verbindung zwischen Adaptervorrichtung und Luftfiltervorrichtung unterscheiden kann.

Die Adaptervorrichtung weist somit eine erste Anschlussvorrichtung auf, die passend zu der Anschlussvorrichtung der Luftfiltervorrichtung, in der die Adaptervorrichtung verwendet werden soll, ausgebildet ist.

Zudem weist die Adaptervorrichtung eine zweite Anschlussvorrichtung auf, die passend zu der Anschlussvorrichtung der vorgesehenen Filterpatrone, die in der Filtervorrichtung verwendet werden soll, ausgebildet ist.

Erfindungsgemäß ist somit vorgesehen, dass die Adaptervorrichtung eine erste Anschlussvorrichtung, vorzugsweise in Form eines Flansches, die mit der Luftfiltervorrichtung verbindbar ist, und eine zweite Anschlussvorrichtung, vorzugsweise in Form eines Flansches, die mit einer Filterpatrone verbindbar ist, umfasst.

Vorzugsweise umfasst die erste Anschlussvorrichtung eine Dichtung, die für eine Abdichtung zwischen der Adaptervorrichtung und der Luftfiltervorrichtung sorgt. Vorzugsweise umfasst die zweite Anschlussvorrichtung eine Dichtung, die für eine Abdichtung zwischen Adaptervorrichtung und der Filterpatrone sorgt. Diese Dichtung ist vorteilhaft, da hierdurch eine Abdichtung gewährleistet ist, selbst wenn eine an der Filterpatrone angebrachte Dichtung beschädigt ist oder während des Einsetzens der Filterpatrone beschädigt wird. Die Dichtungen sind vorzugsweise als Dichtringe ausgebildet, welche umfangsmäßig um den Luftleitungskanal angeordnet sind.

Vorzugsweise ist die Adaptervorrichtung als Rohr oder Ring ausgebildet. Bevorzugt weist ein Ende des Rohres bzw. eine Seite des Ringes die Anschlussvorrichtung für die Luftfiltervorrichtung auf und das andere Ende des Rohres bzw. die andere Seite des Ringes weist die Anschlussvorrichtung für die Filterpatrone auf. Besonders bevorzugt ist die Adaptervorrichtung als Doppelflansch ausgebildet.

In einer vorteilhaften Ausgestaltung umfasst die Adaptervorrichtung eine Aufnahmevorrichtung für die Fixiervorrichtung. Bevorzugt ist diese Aufnahmevorrichtung auf der Rotationsachse der Adaptervorrichtung angeordnet. Somit ist die Aufnahmevorrichtung bevorzugt mittig innerhalb des Luftleitungskanals angeordnet. Besonders bevorzugt wird die Aufnahmevorrichtung von einer oder mehreren Streben gehalten, wobei sich die Streben vorzugsweise radial von der Aufnahmevorrichtung erstrecken. Die Aufnahmevorrichtung kann einen Teil der Fixiervorrichtung derart aufnehmen, dass die Fixiervorrichtung an der Aufnahmevorrichtung festgelegt ist.

In einer vorteilhaften Ausführungsform der Erfindung umfasst die Aufnahmevorrichtung ein Gewinde, in das die Fixiervorrichtung eindrehbar ist. Vorzugsweise ist das Gewinde als Innengewinde, vorzugsweise als Innengewinde einer Bohrung oder einer Mutter, ausgebildet. In dieses Innengewinde kann ein Teil der Fixiervorrichtung, insbesondere eine Gewindestange der Fixiervorrichtung, eingedreht werden.

In einer weiteren Ausführungsform der Erfindung ist die Aufnahmevorrichtung ausgebildet, eine auf einer Gewindestange angeordnete Mutter derart aufzunehmen, dass die Mutter fixiert ist und die Gewindestange gedreht werden kann. Auf diese Weise kann durch Drehen der Gewindestange einer Fixiervorrichtung die Fixiervorrichtung an der Adaptervorrichtung festgelegt werden.

Bevorzugt weist die Aufnahmevorrichtung somit eine Einschuböffnung auf, durch die ein Teil der Fixiervorrichtung geschoben werden kann. Vorzugsweise umfasst die Aufnahmevorrichtung eine von der Einschuböffnung beabstandet angeordnete Zentriervorrichtung. Eine Zentriervorrichtung ermöglicht ein einfaches Positionieren des Teiles der Fixiervorrichtung, der in die Aufnahmevorrichtung aufgenommen wird, bevor dieser Teil an der Aufnahmevorrichtung festgelegt wird. Als Zentriervorrichtung kann eine Öffnung bzw. eine Bohrung in der Aufnahmevorrichtung dienen, wobei die Öffnung bzw. die Bohrung einen größeren Querschnitt aufweist, als der Teil der Fixiervorrichtung, der von der Aufnahmevorrichtung aufgenommen wird.

Auch die Einschuböffnung selbst kann als Zentriervorrichtung fungieren. Somit wird die Fixiervorrichtung, bevorzugt die Gewindestange der Fixiervorrichtung, zunächst durch die Einschuböffnung geschoben, wodurch die Bewegungsmöglichkeit der Fixiervorrichtung eingeschränkt wird, und anschließend durch die beabstandet angeordnete Zentriervorrichtung geschoben, wodurch die Bewegungsmöglichkeit der Fixiervorrichtung noch weiter eingeschränkt wird.

In einer Ausführungsform, in der der in die Aufnahmevorrichtung einzuschiebende Teil die Fixiervorrichtung eine Gewindestange mit aufgedrehter Mutter umfasst, kann die Gewindestange einschließlich der Mutter durch die Einschuböffnung geschoben werden. In diesem Fall kann die beabstandet angeordnete Zentriervorrichtung entweder so ausgestaltet sein, dass die Mutter auch durch die beabstandet angeordnete Zentriervorrichtung geschoben werden kann, oder die Zentriervorrichtung kann so ausgestaltet sein, dass nur der vor der Mutter befindliche Teil der Gewindestange durch die beabstandet angeordnete Zentriervorrichtung geschoben werden kann.

Vorzugsweise korrespondiert der Querschnitt der Einschuböffnung mit dem unteren Teil der einzuschiebenden Mutter der Fixiervorrichtung, wobei sich der Querschnitt vorzugsweise von dem oberen Teil der Mutter unterscheidet. Vorzugsweise weist der obere Teil der Mutter einen geringen Querschnitt auf als der untere Teil der Mutter. Vorzugsweise sind die Einschuböffnung der Aufnahmevorrichtung und die Mutter der Fixiervorrichtung so ausgebildet, dass die Mutter nur in einer oder in mehreren Ausrichtungen, insbesondere Drehwinkeln, aber nicht in jeder Ausrichtung, insbesondere Drehwinkeln, in die Einschuböffnung eingeführt bzw. aus der Einschuböffnung herausgezogen werden kann.

Auf diese Weise wird ermöglicht, dass die Fixiervorrichtung einschließlich der an der Fixiervorrichtung festgelegten Filterpatrone durch ein Einschieben des oberen Abschnitts der Fixiervorrichtung in die Aufnahmevorrichtung und ein anschließendes Drehen der Fixiervorrichtung gesichert ist und an der Aufnahmevorrichtung hängt. In diesem Zustand liegt der untere Teil der Mutter der Fixiervorrichtung auf dem innenliegenden Rand der Einschuböffnungsumrandung teilweise auf.

Vorzugsweise ist die Aufnahmevorrichtung derart ausgebildet, dass ein vollständiges Drehen der Mutter um 360° innerhalb der Aufnahmevorrichtung verhindert werden kann, sodass ein Drehen der Fixiervorrichtung bewirkt, dass die Fixiervorrichtung an der Adaptervorrichtung festgelegt wird.

Bevorzugt weist die Aufnahmevorrichtung hierzu mindestens eine Dreh-Barriere auf, welche besonders bevorzugt auf dem innenliegenden Rand der Einschuböffnungsumrandung angeordnet ist. In einer Ausführungsform ist die mindestens eine Dreh-Barriere ein Vorsprungelement, das sich vorzugsweise von dem innenliegenden Rand der Einschuböffnungsumrandung in Richtung der beabstandet angeordneten Zentriervorrichtung erstreckt. Die Dreh-Barriere erstreckt sich vorzugsweise jedoch nicht bis zur die Zentriervorrichtung, sodass zum Lösen der Fixiervorrichtung aus der Aufnahmevorrichtung die Fixiervorrichtung einschließlich der Mutter soweit angehoben und dann gedreht werden kann, dass die Fixiervorrichtung aus der Aufnahmevorrichtung herausgezogen werden kann.

Die der Einschuböffnung entgegenliegende Seite der Aufnahmevorrichtung, d. h. die Seite der Aufnahmevorrichtung, die von der Filterpatrone weg gerichtet ist, weist vorzugsweise einen geringen Luftwiderstand auf. Vorzugsweise hat diese Seite der Aufnahmevorrichtung die Form eines Kegels, einer Pyramide oder einer Halbkugel. Eine solche Ausgestaltung bewirkt eine verbesserte Luftverteilung während eines Reinigungsprozesses durch einen Druckluftstoß.

Die Fixiervorrichtung kann zumindest teilweise in eine Filterpatrone eingeschoben werden. In einer vorteilhaften Ausgestaltung der Erfindung umfasst die Fixiervorrichtung einen oberen und einen unteren Abschnitt, wobei der obere Abschnitt zur Festlegung an der Adaptervorrichtung ausgebildet ist, und der untere Abschnitt zur Festlegung an der Filterpatrone ausgebildet ist.

Bevorzugt ist der untere Abschnitt der Fixiervorrichtung ausgebildet, an einem Filterpatronenboden festgelegt zu werden. Vorzugsweise umfasst der untere Abschnitt der Fixiervorrichtung eine Gewindestange, die ausgebildet ist, vom Inneren der Filterpatrone durch eine Öffnung des Filterpatronenbodens nach außen geschoben zu werden und mittels einer Mutter, die von außen auf die Gewindestange gedreht wird, an dem Filterpatronenboden festgelegt zu werden.

In einer vorteilhaften Ausführungsform der Erfindung umfasst der untere Abschnitt der Fixiervorrichtung eine Durschubsicherung. Somit kann der untere Abschnitt der Fixiervorrichtung bis zur Durchschubsicherung durch eine Öffnung des Filterpatronenbodens nach außen geschoben werden, wobei die Durchschubsicherung ein weiteres Durchschieben verhindert. Die Durchschubsicherung kann eine Querschnittserweiterung des unteren Abschnitts der Fixiervorrichtung oder eine Mutter oder ein sonstiger auf dem unteren Abschnitt angeordneter Gegenstand sein, der ein weiteres Durchschieben verhindert.

In einer Ausführungsform, in der der untere Abschnitt der Fixiervorrichtung als Gewindestange ausgebildet ist, kann die Fixiervorrichtung zudem eine Mutter umfassen, die von außen auf die Gewindestange gedreht werden, sodass der Filterpatronenboden zwischen Mutter und Durchschubsicherung festgeklemmt ist.

Als Mutter, die von außen auf die Gewindestange gedreht werden kann, wird vorzugsweise eine Mutter verwendet, die werkzeuglos festgezogen werden kann, besonders bevorzugt wird somit eine Knebelgriffmutter, Sterngriffmutter, Knaufgriffmutter oder Rändelmutter verwendet.

In einer vorteilhaften Ausgestaltung der Erfindung umfasst die Fixiervorrichtung einen Verdrängungskörper. Ein Verdrängungskörper ist ein voluminöser Körper, der den Luftleitungskanal innerhalb der Filterpatrone teilweise ausfüllt und somit minimiert. Aufgrund des geringeren Luftvolumens innerhalb der Filterpatrone bei Verwendung eines solchen Verdrängungskörpers kann eine effektivere und gleichmäßigere Druckstoßreinigung der Filterpatrone erfolgen.

Bevorzugt ist die Durchschubsicherung des unteren Abschnitts der Fixiervorrichtung als Verdrängungskörper ausgebildet. Ebenso kann die Durchschubsicherung des unteren Abschnitts der Fixiervorrichtung einen Teil des Verdrängungskörpers bilden oder zusätzlich zum Verdrängungskörper vorhanden sein. Der Verdrängungskörper kann sich bis zum oberen Abschnitt der Fixiervorrichtung erstrecken.

In einer bevorzugten Ausgestaltung der Erfindung umfasst der obere Abschnitt der Fixiervorrichtung eine Gewindestange. Die Gewindestange kann in einer Ausführungsform der Erfindung in ein entsprechendes Gewinde der Adaptervorrichtung, insbesondere der Aufnahmevorrichtung, gedreht werden, um die Fixiervorrichtung mit der Adaptervorrichtung zu verbinden.

Bevorzugt umfasst die Gewindestange des oberen Abschnitts der Fixiervorrichtung eine aufgedrehte Mutter. Die auf der Gewindestange angeordnete Mutter ist vorgesehen, in die Aufnahmevorrichtung der Adaptervorrichtung eingeschoben zu werden. Die aufgedrehte Mutter kann ein oder mehrere Vorsprungelemente aufweisen. Ein Vorsprungelement hat vorzugsweise die Form eines Flügels. Der Querschnitt des unteren Endes der Mutter entspricht somit vorzugsweise dem Querschnitt der Einschuböffnung der Aufnahmevorrichtung, sodass die Mutter inklusive der Vorsprungelemente in die Aufnahmevorrichtung eingeschoben werden kann. Anschließend kann die Gewindestange und somit die auf der Gewindestange angeordnete Mutter derart gedreht werden, dass die Vorsprungelemente der Mutter auf dem inneren Rand der Einschuböffnungsumrandung aufliegen und ein Herausziehen bzw. Herausfallen aus der Aufnahmevorrichtung verhindern.

Das eine bzw. die mehreren Vorsprungelemente sind vorzugsweise an dem Ende der Mutter angeordnet, dass sich nahe dem unteren Abschnitt der Fixiervorrichtung befindet. In einer solchen Ausführungsform kann das obere Ende der auf der Gewindestange angeordneten Mutter durch die Zentriervorrichtung der Aufnahmevorrichtung, falls vorhanden, zentriert werden.

In der Ausführungsform, in der die Aufnahmevorrichtung eine oder mehrere DrehBarrieren aufweist, wird die Mutter mit den Vorsprungelementen so weit in die Aufnahmevorrichtung eingeschoben, dass die Mutter oberhalb der Dreh-Barriere(n) gedreht werden kann. Anschließend kann die Fixiervorrichtung herabgelassen werden, sodass die Vorsprungelemente auf dem inneren Rand der Einschuböffnungsumrandung aufliegen und die Drehbarrieren ein vollständiges Drehen der Mutter verhindern. Durch Drehen der Fixiervorrichtung wird somit die Mutter fixiert und die Gewindestange durch die Mutter gedreht, sodass die Fixiervorrichtung an der Adaptervorrichtung festgelegt wird. Das Drehen der Fixiervorrichtung kann durch Drehen der Filterpatrone erfolgen, in der die Fixiervorrichtung angeordnet ist, und mit der die Fixiervorrichtung verbunden ist.

In einer bevorzugten Ausgestaltung der Erfindung ist das obere Ende der der Gewindestange des oberen Abschnittes der Fixiervorrichtung so ausgebildet, dass die auf der Gewindestange des oberen Abschnittes angeordnete Mutter nicht von der Gewindestange gedreht werden kann. Hierzu kann das obere Ende der Gewindestange einen größeren Durchmesser aufweisen als der Innendurchmesser der Mutter oder das obere Ende der Gewindestange kann ein Vorsprungelement aufweisen, welches ein Lösen der Mutter verhindert.

Vorzugsweise liegt ein Gewinde bzw. liegen mehrere Gewinde der erfindungsgemäßen Vorrichtung als Trapezgewinde vor, insbesondere die Gewindestange des oberen Abschnittes der Fixiervorrichtung und/oder die Gewindestange des unteren Abschnitts der Fixiervorrichtung und/oder die entsprechenden Gegengewinde der Aufnahmevorrichtung und/oder der auf der Gewindestange des oberen Abschnittes der Fixiervorrichtung angeordneten Mutter und/oder der Mutter, die den unteren Abschnitt der Fixiervorrichtung an der Filterpatrone festgelegt. Ein solches Trapezgewinde ermöglicht eine Festlegung durch wenige Umdrehungen.

Vorzugsweise umfasst der untere und/oder obere Abschnitt der Fixiervorrichtung Abstandhalter. Diese Abstandhalter sorgen für eine Zentrierung der Fixiervorrichtung innerhalb der Filterpatrone. Bevorzugt sind die Abstandhalter umfangsmäßig um die Fixiervorrichtung angeordnet. In einer bevorzugten Ausgestaltung der Erfindung sind ein oder mehrere Abstandhalter an der Durchschubsicherung der Fixiervorrichtung angeordnet. In einer ebenfalls bevorzugten Ausgestaltung der Erfindung sind ein oder mehrere Abstandhalter in dem unteren Bereich des oberen Abschnitts der Fixiervorrichtung angeordnet. Vorzugsweise sind Abstandhalter sowohl am unteren Abschnitt als auch am oberen Abschnitt der Fixiervorrichtung angeordnet. Bevorzugt sind die Abstandhalter, die am unteren Abschnitt der Fixiervorrichtung angeordnet sind, starr ausgebildet. Bevorzugt sind die Abstandhalter, die am oberen Abschnitt der Fixiervorrichtung angeordnet sind, flexibel ausgestaltet. Die flexiblen Abstandhalter am oberen Abschnitt der Fixiervorrichtung ermöglichen eine Einführung der Fixiervorrichtung in die Filterpatrone und ein Anliegen der Abstandhalter an der Innenseite der Filterpatrone, selbst wenn der obere Flansch der Filterpatrone einen geringeren Innendurchmesser aufweist, als der Innendurchmesser der Filterpatrone unterhalb des Flansches. Der untere Teil der Fixiervorrichtung mit den starren Abstandshaltern kann schräg in Filterpatrone eingeführt werden, sodass diese Abstandhalter starr ausgebildet sein können.

Die vorliegende Erfindung umfasst zudem ein Verfahren zum Einsetzen einer Filterpatrone in eine Luftfiltervorrichtung unter Verwendung der erfindungsgemäßen Haltevorrichtung, umfassend die Schritte
a) Anbringen der Adaptervorrichtung an der Luftfiltervorrichtung,
b) zumindest teilweises Einschieben der Fixiervorrichtung in die Filterpatrone,
c) Festlegen der Fixiervorrichtung an der Filterpatrone, bevorzugt an dem Filterpatronenboden, besonders bevorzugt mittels einer Mutter, die von außen auf das untere Ende der Fixiervorrichtung gedreht wird,
d) Anbringen der Fixiervorrichtung an der Adaptervorrichtung, vorzugsweise durch Drehen der Filterpatrone.

Vorzugsweise werden die Schritte a) bis d) in der angegebenen Reihenfolge durchgeführt. Vorzugsweise besteht das Verfahren aus den angegebenen Schritten.

Vorzugsweise wird in Schritt d) die Fixiervorrichtung, bevorzugt der obere Abschnitt der Fixiervorrichtung, mit der Aufnahmevorrichtung der Adaptervorrichtung verbunden. Bevorzugt wird hierzu der obere Abschnitt der Fixiervorrichtung zunächst in die Aufnahmevorrichtung eingehängt und anschließend festgedreht.

In einer vorteilhaften Ausgestaltung der Erfindung wird Schritt b) außerhalb der Luftfiltervorrichtung durchgeführt.

Vorzugsweise werden die Schritte b) bis d) werkzeuglos durchgeführt.

Die Beschreibung der erfindungsgemäßen Vorrichtung und des erfindungsgemäßen Verfahrens sind als komplementär zueinander zu verstehen, sodass Verfahrensangaben, die im Zusammenhang mit der Vorrichtung erläutert sind, ebenfalls einzeln oder kombiniert als Verfahrensangaben zu verstehen sind. Merkmale der Vorrichtung, die im Zusammenhang mit dem erfindungsgemäßen Verfahren erläutert sind, sind einzeln oder miteinander kombiniert auch als Merkmale der erfindungsgemäßen Vorrichtung zu verstehen.

Die Erfindung wird im Folgenden anhand der Figuren nochmals erläutert.
Fig. 1 zeigt eine beispielhafte Ausführungsform einer Adaptervorrichtung einer erfindungsgemäßen Haltevorrichtung.
Fig. 2a zeigt einen Ausschnitt einer beispielhaften Ausführungsform einer Adaptervorrichtung einer erfindungsgemäßen Haltevorrichtung.
Fig. 2b zeigt eine vergrößerte Ansicht eines Ausschnitts der Fig. 2a.
Fig. 3 zeigt eine beispielhafte Ausführungsform einer Fixiervorrichtung einer erfindungsgemäßen Haltevorrichtung.
Fig. 4 zeigt einen Ausschnitt einer beispielhaften Ausführungsform einer Fixiervorrichtung einer erfindungsgemäßen Haltevorrichtung.
Fig. 5 zeigt eine beispielhafte Ausführungsform einer Fixiervorrichtung einer erfindungsgemäßen Haltevorrichtung in einer Filterpatrone.
Fig. 6 zeigt einen Ausschnitt einer beispielhaften Ausführungsform einer Fixiervorrichtung einer erfindungsgemäßen Haltevorrichtung in einer Filterpatrone.
Fig. 7 zeigt eine beispielhafte Ausführungsform einer erfindungsgemäßen Haltevorrichtung.

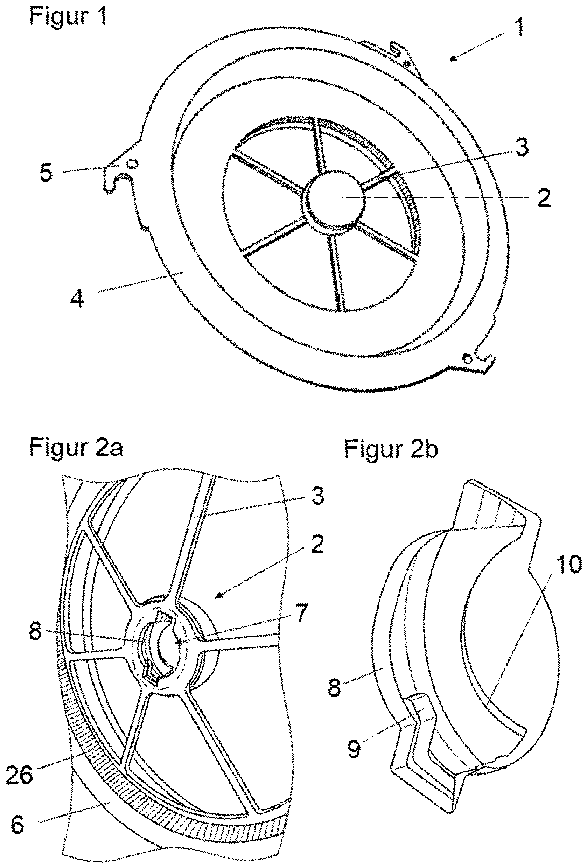

Fig. 1 zeigt eine beispielhafte Ausführungsform einer Adaptervorrichtung 1 einer erfindungsgemäßen Haltevorrichtung. Die Adaptervorrichtung 1 umfasst einen Flansch 4, der mittels Laschen 5 an eine Luftfiltervorrichtung montiert werden kann. Die Adaptervorrichtung 1 ist vorgesehen, an den Abluftkanal, d. h. den Luftleitungskanal, der die gereinigte Luft abführt, montiert zu werden. Fig. 1 zeigt die Seite der Adaptervorrichtung 1, die im montierten Zustand in Richtung des Abluftkanals der Filtervorrichtung gerichtet ist, wobei die andere Seite der Adaptervorrichtung 1 vorgesehen ist, mit der Filterpatrone verbunden zu werden. Mittig der Adaptervorrichtung 1 ist eine Aufnahmevorrichtung 2 angeordnet, die mittels radial verlaufender Streben 3 gehalten wird. Die Aufnahmevorrichtung 2 weist die Form einer Halbkugel auf.

Fig. 2a zeigt einen Ausschnitt einer beispielhaften Ausführungsform einer Adaptervorrichtung einer erfindungsgemäßen Haltevorrichtung. Fig. 2a zeigt die Seite einer Adaptervorrichtung 1, die vorgesehen ist, mit einer Filterpatrone verbunden zu werden. Hierzu kann ein Flansch der Filterpatrone mit dem Flansch 6 der Adaptervorrichtung 1 verbunden werden. Die Anschlussvorrichtung in Form des Flansches 6 umfasst zudem einen Dichtring 26 zur Abdichtung des Luftleitungskanals zwischen Filterpatrone und Adaptervorrichtung 1. Die durch die Streben 3 gehaltene Aufnahmevorrichtung 2 umfasst eine durch die Einschuböffnungsumrandung 8 gebildete Einschuböffnung 7.

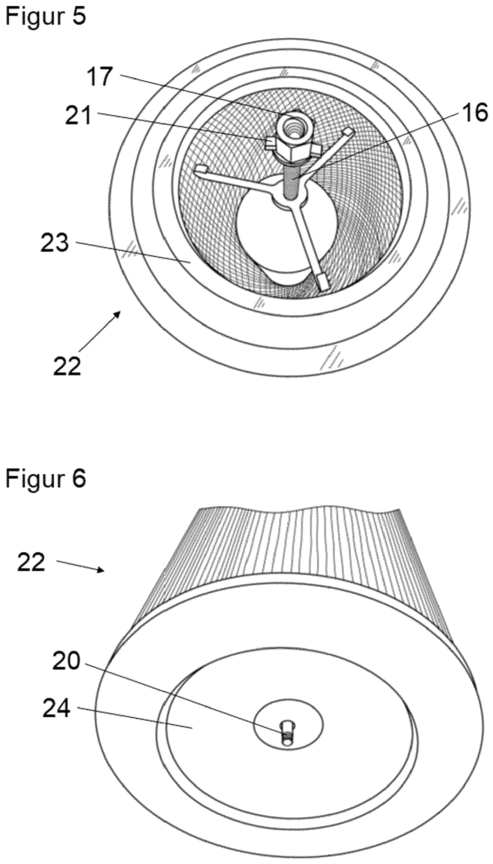

Fig. 2b zeigt eine vergrößerte Ansicht eines Ausschnitts der Fig. 2a. Die Aufnahmevorrichtung 2 weist eine Einschuböffnungsumrandung 8 auf, die die Einschuböffnung ausbildet. Von der Einschuböffnung beabstandet ist eine Zentriervorrichtung 10 vorhanden. Die Zentriervorrichtung 10 weist hier die Form eines Ringes auf und kann eine durch die Einschuböffnung eingeführte Mutter zentrieren. Zwischen der Einschuböffnung und der Zentriervorrichtung 10 ist eine Dreh-Barriere 9 in Form eines Vorsprungelementes angeordnet. Eine solche Aufnahmevorrichtung 2 kann eine Mutter mit Vorsprungelementen einer Fixiervorrichtung (siehe beispielsweise Figur 5, Bezugszeichen 17, 21) derart aufnehmen, dass die Fixiervorrichtung gedreht werden kann, wenn die Vorsprungelemente in einer Ebene zwischen der Dreh-Barriere 9 und der Zentriervorrichtung 10 angeordnet sind. Wenn die Fixiervorrichtung nach dem Einführen in die Aufnahmevorrichtung 2 so gedreht und sacken gelassen wird, dass die Vorsprungelemente auf dem inneren Rand der Einschuböffnungsumrandung 8 aufliegen, kann die Fixiervorrichtung nicht aus der Aufnahmevorrichtung 2 herausgezogen werden. Durch Drehen der Fixiervorrichtung kann sich die Mutter der Fixiervorrichtung nur so weit drehen, bis die Vorsprungelemente gegen die Dreh-Barriere 9 stoßen. Wird die Fixiervorrichtung nun weiter gedreht, sodass das obere Ende der Gewindestange der Fixiervorrichtung durch die Mutter weiter in die Aufnahmevorrichtung 2 der Adaptervorrichtung 1 gedreht wird, nähert sich der obere Flansch der Filterpatrone, die um die Fixiervorrichtung angeordnet ist, dem Flansch der Adaptervorrichtung an bis er schließlich unmittelbar anliegt.

Zum Lösen der Filterpatrone wird die Filterpatrone und somit die Fixiervorrichtung in die andere Richtung gedreht, sodass sich der Abstand zwischen der Filterpatrone und der Adaptervorrichtung 1 vergrößert. Anschließend kann die Filterpatrone und somit die Fixiervorrichtung so angehoben und gedreht werden, dass die Mutter der Gewindestange der Fixiervorrichtung aus der Aufnahmevorrichtung 2 gezogen werden kann.

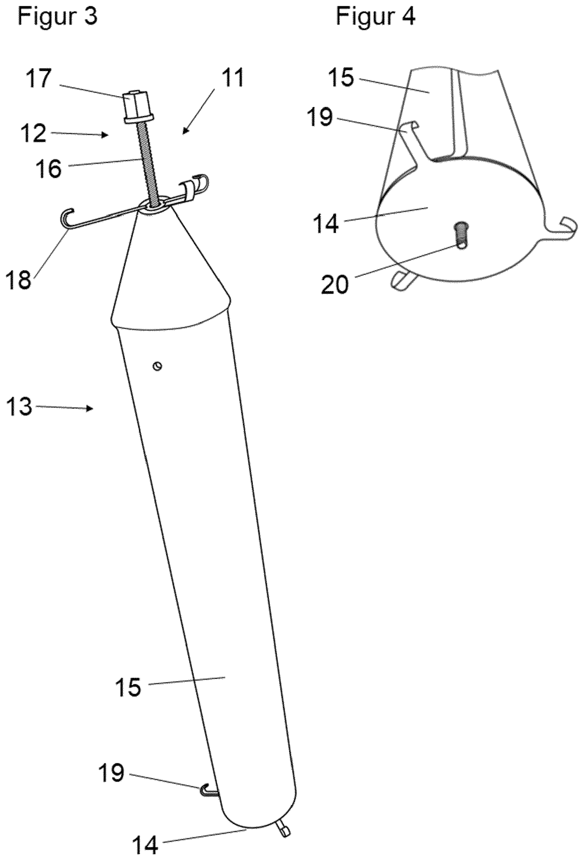

Fig. 3 zeigt eine beispielhafte Ausführungsform einer Fixiervorrichtung 11 einer erfindungsgemäßen Haltevorrichtung. Die Fixiervorrichtung 11 umfasst einen oberen Abschnitt 12 und einen unteren Abschnitt 13. Der untere Abschnitt 13 umfasst eine Durschubsicherung 14 in Form eines Verdrängungskörpers 15. Zudem umfasst der untere Abschnitt 13 Abstandhalter 19. Der obere Abschnitt 12 umfasst eine Gewindestange 16, auf die eine Mutter 17 aufgedreht ist. Zudem umfasst der obere Abschnitt Abstandhalter 18.

Fig. 4 zeigt einen Ausschnitt einer beispielhaften Ausführungsform einer Fixiervorrichtung einer erfindungsgemäßen Haltevorrichtung. Der dargestellte Ausschnitt zeigt einen Teil des unteren Abschnitts der Fixiervorrichtung, der an seinem Ende eine Gewindestange 20 aufweist, die vorgesehen ist, durch eine Öffnung eines Filterpatronenbodens geschoben zu werden. Die Durchschubsicherung 14 sorgt dafür, dass die Gewindestange 20 nur soweit durch die Öffnung des Filterpatronenbodens geschoben werden kann, bis die Durschubsicherung 14 auf dem Filterpatronenboden aufliegt. An die Durchschubsicherung 14 schließt sich in Richtung des anderen Endes der Fixiervorrichtung 11 ein Verdrängungskörper 15 an. Die Durschubsicherung 14 und der Verdrängungskörper 15 können einteilig als auch mehrteilig ausgebildet sein. Zudem sind Abstandhalter 19 an der Durschubsicherung 14 angeordnet, die die Fixiervorrichtung 11 beim Einschieben in eine Filterpatrone so zentrieren, dass die Gewindestange 20 durch die Öffnung des Filterpatronenbodens geschoben werden kann.

Fig. 5 zeigt eine beispielhafte Ausführungsform einer Fixiervorrichtung einer erfindungsgemäßen Haltevorrichtung in einer Filterpatrone 22. Bei eingeschobener Fixiervorrichtung in die Filterpatrone 22 können der obere Teil der Gewindestange 16 sowie die aufgedrehte Mutter 17 mit den Vorsprungelementen 21 aus der Filterpatrone 22 hinausragen. Die Fixiervorrichtung kann nun samt Filterpatrone 22 derart mit einer Adaptervorrichtung verbunden werden, dass der Flansch 23 der Filterpatrone 22 an der Adaptervorrichtung anliegt.

Fig. 6 zeigt einen Ausschnitt einer beispielhaften Ausführungsform einer Fixiervorrichtung einer erfindungsgemäßen Haltevorrichtung in einer Filterpatrone 22. Ein Ende der Filterpatrone 22 ist durch einen Filterpatronenboden 24 verschlossen. Der Filterpatronenboden 24 weist mittig eine Öffnung auf, durch die die Gewindestange 20 des unteren Teiles der Fixiervorrichtung, die innerhalb der Filterpatrone angeordnet ist, hinausragt. Auf das Gewinde dieser Stange kann zur Festlegung der Fixiervorrichtung an der Filterpatrone eine Mutter geschraubt werden, sodass der Filterpatronenboden zwischen der Mutter und der innerhalb der Filterpatrone angeordneten Durchschubsicherung der Fixiervorrichtung festgeklemmt wird.

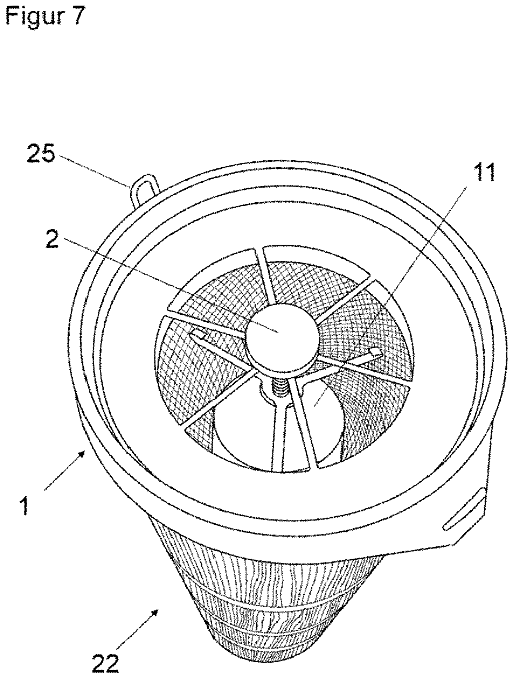

Fig. 7 zeigt eine beispielhafte Ausführungsform einer erfindungsgemäßen Haltevorrichtung, bei der die Fixiervorrichtung 11 in einer Filterpatrone 22 angeordnet ist und der obere Abschnitt der Fixiervorrichtung 11 mit der Aufnahmevorrichtung 2 der Adaptervorrichtung 1 verbunden ist. Die Adaptervorrichtung 1 umfasst Ösen 25, die zur Festlegung der Adaptervorrichtung 1 an einer Luftfiltervorrichtung dienen.

### Bezugszeichenliste

1) Adaptervorrichtung
2) Aufnahmevorrichtung
3) Streben
4) Flansch
5) Lasche
6) Flansch
7) Einschuböffnung
8) Einschuböffnungsumrandung
9) Drehbarriere
10) Zentriervorrichtung
11) Fixiervorrichtung
12) oberer Abschnitt der Fixiervorrichtung
13) unterer Abschnitt der Fixiervorrichtung
14) Durschubsicherung
15) Verdrängungskörper
16) Gewindestange
17) Mutter
18) Abstandhalter
19) Abstandhalter
20) Gewindestange
21) Vorsprungelement
22) Filterpatrone
23) Flansch der Filterpatrone
24) Filterpatronenboden
25) Öse
26) Dichtring

## Patentansprüche

1. Haltevorrichtung für Filterpatronen in Luftfiltervorrichtungen, wobei die Haltevorrichtung
eine Adaptervorrichtung (1) zum Anbringen an der Luftfiltervorrichtung und eine Fixiervorrichtung (11), die ausgebildet ist, an der Adaptervorrichtung (1) und an einer Filterpatrone (22) festgelegt zu werden,
umfasst.

2. Haltevorrichtung nach Anspruch 1, wobei die Adaptervorrichtung (1) als Rohr oder als Ring ausgebildet ist.

3. Haltevorrichtung nach Anspruch 1 oder 2, wobei die Adaptervorrichtung (1) eine erste Anschlussvorrichtung, vorzugsweise in Form eines Flansches (4), die mit der Luftfiltervorrichtung verbindbar ist, und eine zweite Anschlussvorrichtung, vorzugsweise in Form eines Flansches (6), die mit einer Filterpatrone (22) verbindbar ist, umfasst.

4. Haltevorrichtung nach einem der Ansprüche 1 bis 3, wobei die Adaptervorrichtung (1) eine Aufnahmevorrichtung (2) für die Fixiervorrichtung (11) umfasst, wobei die Aufnahmevorrichtung (2) bevorzugt auf der Rotationsachse der Adaptervorrichtung (1) angeordnet ist, und besonders bevorzugt von einer oder mehreren Streben (3), die sich insbesondere radial von der Aufnahmevorrichtung (2) erstrecken, gehalten wird.

5. Haltevorrichtung nach Anspruch 4, wobei die Aufnahmevorrichtung (2) ein Gewinde umfasst, in das die Fixiervorrichtung (11) eindrehbar ist.

6. Haltevorrichtung nach Anspruch 4 oder 5, wobei die Aufnahmevorrichtung (2) ausgebildet ist, eine auf einer Gewindestange (16) angeordnete Mutter (17) derart aufzunehmen, dass die Mutter (17) fixiert ist und die Gewindestange (16) gedreht werden kann.

7. Haltevorrichtung nach einem der Ansprüche 4 bis 6, wobei die Aufnahmevorrichtung (2) eine Einschuböffnung (7) umfasst, und vorzugsweise eine von der Einschuböffnung (7) beabstandet angeordnete Zentriervorrichtung (10).

8. Haltevorrichtung nach einem der Ansprüche 1 bis 7, wobei die Fixiervorrichtung (11) einen oberen Abschnitt (12) und einen unteren Abschnitt (13) umfasst, wobei der obere Abschnitt (12) zur Festlegung an der Adaptervorrichtung (1) ausgebildet ist, und der untere Abschnitt (13) zur Festlegung an einer Filterpatrone (22) ausgebildet ist.

9. Haltevorrichtung nach Anspruch 8, wobei der untere Abschnitt (13) der Fixiervorrichtung (11) ausgebildet ist, an einem Filterpatronenboden (24) festgelegt zu werden.

10. Haltevorrichtung nach Anspruch 8 oder 9, wobei der untere Abschnitt (13) der Fixiervorrichtung (11) eine Gewindestange (20) umfasst, die ausgebildet ist, vom Inneren der Filterpatrone (22) durch eine Öffnung des Filterpatronenbodens (24) nach außen geschoben zu werden und mittels einer Mutter, die von außen auf die Gewindestange gedreht wird, an dem Filterpatronenboden (24) festgelegt zu werden.

11. Haltevorrichtung nach einem der Ansprüche 8 bis 10, wobei der untere Abschnitt (13) der Fixiervorrichtung eine Durschubsicherung (14) umfasst.

12. Haltevorrichtung nach einem der Ansprüche 1 bis 11, wobei die Fixiervorrichtung (11) einen Verdrängungskörper (15) umfasst, wobei bevorzugt die Durchschubsicherung (14) als Verdrängungskörper (15) ausgebildet ist.

13. Haltevorrichtung nach einem der Ansprüche 8 bis 12, wobei der obere Abschnitt (12) der Fixiervorrichtung (11) eine Gewindestange (16) umfasst.

14. Haltevorrichtung nach Anspruch 13, wobei die Gewindestange (16) des oberen Abschnitts (12) der Fixiervorrichtung (11) eine aufgedrehte Mutter (17) umfasst, wobei die aufgedrehte Mutter (17) bevorzugt ein oder mehrere Vorsprungelemente (21), besonders bevorzugt in Form eines oder mehrerer Flügel, aufweist.

15. Verfahren zum Einsetzen einer Filterpatrone (22) in eine Luftfiltervorrichtung unter Verwendung einer Haltevorrichtung nach einem der Ansprüche 1 bis 14 umfassend die Schritte
a) Anbringen der Adaptervorrichtung (1) an der Luftfiltervorrichtung,
b) zumindest teilweises Einschieben der Fixiervorrichtung (11) in die Filterpatrone (22), wobei Schritt b) vorzugsweise außerhalb der Luftfiltervorrichtung durchgeführt wird,
c) Festlegen der Fixiervorrichtung (11) an der Filterpatrone (22), bevorzugt an dem Filterpatronenboden (24), besonders bevorzugt mittels einer Mutter, die von außen auf das untere Ende der Fixiervorrichtung (11) gedreht wird,
d) Anbringen der Fixiervorrichtung (11) an der Adaptervorrichtung (1), vorzugsweise durch Drehen der Filterpatrone (22).
